# EUROPÄISCHE PATENTSCHRIFT

(11) **EP 3 486 114 B1**
(45) Veröffentlichungstag und Bekanntmachung des Hinweises auf die Patenterteilung: **22.04.2020**
(21) Anmeldenummer: 18201428.2
(22) Anmeldetag: 19.10.2018
(51) Int. Cl.: B60N 2/75

(54) **FAHRZEUGSITZ MIT VERSTELLEINRICHTUNG**
VEHICLE SEAT WITH ADJUSTMENT AID
SIÈGE DE VÉHICULE POURVU DE DISPOSITIF DE RÉGLAGE

(30) Priorität: 10.11.2017 DE 102017126429
(43) Veröffentlichungstag der Anmeldung: 22.05.2019
(73) Patentinhaber: Grammer AG, 92224 Amberg (DE)
(72) Erfinder: Pelka, Joachim, 92224 Amberg (DE)
(74) Vertreter: Hannke, Christian

(56) Entgegenhaltungen:
- JP-B2- 4 286 183
- US-A- 4 953 259
- US-B2- 7 014 255

## Beschreibung

Die Erfindung betrifft einen Fahrzeugsitz mit einer seitlich angeordneten Bedieneinrichtung zum Bedienen von Fahrzeugsitz- und/ oder Fahrzeugfunktionen und einer Verstelleinrichtung zur Verstellung einer vertikalen Position und/ oder eines Neigungsgrades der Bedieneinrichtung gegenüber einem Rest des Fahrzeugsitzes.

Gattungsgemäße Fahrzeugsitze mit derartigen Bedieneinrichtungen sind aus dem Stand der Technik bereits gut bekannt. Diese Bedieneinrichtungen umfassen beispielsweise eine Art Steuerknüppel ("Joystick") und weitere Bedienelemente wie Tasten oder Schalter und bieten dem Fahrer oder Benutzer somit beispielsweise die Möglichkeit, Elemente wie den Fahrzeugsitz und/ oder an einem dem Fahrzeugsitz zugeordneten Fahrzeug angeordnete Elemente wie eine Baggerschaufel zu verstellen, zu bewegen und/ oder zu aktivieren.

Oft sind diese Bedieneinrichtungen mechanisch zumindest teilweise von Verstelleinrichtungen des Sitzes für Höhen- und/ oder Längsposition des Sitzes getrennt und beispielsweise seitlich am Sitz angeordnet. Nimmt nun ein Bediener auf dem Sitz Platz und muss die Höhe des Sitzes verstellen, so sind die Bedieneinrichtungen unter Umständen für ihn nicht mehr so gut erreichbar.

So zeigt die JP 4 286183 B2 eine an einem Sitz angeordnete Bedieneinrichtung, welche mittels einer Parallelogrammverbindung höhen- und längsverstellbar ist. Dabei muss die Kraft einer Feder, welche einen Stift in einen oberen Teil einer Führungsnut hineindrückt, überwunden werden. Danach kann der Stift in einen eine bogenförmige Nut ausbildenden unteren Teil der Führungsnut verlagert und innerhalb diesem verschoben werden.

Die US 4 953 259 A offenbart einen reibschlussbehafteten Drehmechanismus für eine Armlehne, welcher eine Wechselwirkung zwischen einer Schraube und einem elastischen Führungskanal aufweist.

Es ist daher Aufgabe der vorliegenden Erfindung, für einen gattungsgemäßen Fahrzeugsitz eine Verstelleinrichtung zu entwickeln, welche auf einfache und kostengünstige Weise eine Verstellung der Bedieneinrichtung hinsichtlich deren vertikaler Position und/ oder hinsichtlich deren Neigungsgrad ermöglicht.

Die Aufgabe der Erfindung wird gelöst von einem Fahrzeugsitz mit einer seitlich angeordneten Bedieneinrichtung zum Bedienen von Fahrzeugsitz- und/ oder Fahrzeugfunktionen und einer Verstelleinrichtung zur Verstellung einer vertikalen Position und/ oder eines Neigungsgrades der Bedieneinrichtung gegenüber einem Rest des Fahrzeugsitzes, wobei die Verstelleinrichtung eine in Sitzbreitenrichtung verlaufende Drehachse und eine mit der Bedieneinrichtung verbundene Welle umfasst, welche beabstandet zur Drehachse und zusammen mit der Bedieneinrichtung um diese verschwenkbar angeordnet ist. Erfindungsgemäß ist ein Führungselement, welches in Richtung einer Mittelachse der Welle angeordnet und mit der Welle starr verbunden ist, hinsichtlich der Verschwenkung der Welle um die Drehachse innerhalb einer Führungskulisse eines Kulissenelements bewegbar. Dabei weist die Führungskulisse zumindest einen ersten Anteil auf, dessen Form entlang eines Abschnittes eines Bogens verlaufend ausgestaltet ist. Außerdem weist die Führungskulisse zweite Anteile auf, welche angrenzend zum mindestens einen ersten Anteil angeordnet und im Wesentlichen dreiecksförmig ausgestaltet sind. Es ist dabei das Führungselement innerhalb der ersten und zweiten Anteile der Führungskulisse zumindest um die Mittelachse der Welle verschwenkbar ist, wobei mindestens zwei, bevorzugt drei Arretierpositionen des Führungselements innerhalb der Führungskulisse definiert sind.

Durch die Anordnung der Drehachse und der Welle ist gewährleistet, dass auf einfache Weise manuell oder automatisch die Welle um die Drehachse verschwenkbar angeordnet ist. Da die Welle mit der Bedieneinrichtung verbunden ist, kann die Bedieneinrichtung einfach mit verschwenkt werden. Durch die Verschwenkung kann bevorzugt sowohl die vertikale Position als auch der Neigungsgrad der Bedieneinrichtung gegenüber einem Rest des Fahrzeugsitzes verändert werden. Dabei ist unter dem Rest des Fahrzeugsitzes beispielsweise alles zu verstehen, was nicht mit verschwenkt wird oder beispielsweise der Sitzunterbau.

Gemäß einer bevorzugten Ausführungsform ist der Fahrzeugsitz an seinen beiden Seiten, also zur linken und zur rechten Seite des Benutzers, mit jeweils einer Bedieneinrichtung und jeweils einer Verstelleinrichtung versehen. Es ist ferner vorteilhaft, wenn die Welle ausgehend von einer Mittelposition um die Drehachse um einen Winkel aus einem Bereich von +/-2° bis +/-10°, bevorzugt um +/-4° verschwenkbar ist.

Vorteilhaft ist dabei ein Abstand zwischen der Drehachse und der Welle fest einstellbar und die Drehachse in Sitzlängsrichtung hinter der Welle angeordnet. Vorteilhaft ist die Drehachse in Sitzhöhenrichtung oberhalb von der Welle angeordnet. Beide Anordnungen gelten vorteilhaft unabhängig von der Position der Welle innerhalb ihrer Verstellmöglichkeiten, welche beispielsweise anhand der unten genauer beschriebenen Führungskulisse definiert sind.

Um eine Führung der Welle zu gewährleisten, ist es wie oben beschrieben vorgesehen, dass ein Führungselement, welches in Richtung einer Mittelachse der Welle angeordnet und mit der Welle starr verbunden ist, hinsichtlich der Verschwenkung der Welle um die Drehachse innerhalb einer Führungskulisse eines Kulissenelements bewegbar ist, wobei die Führungskulisse zumindest einen ersten Anteil aufweist, dessen Form entlang eines Abschnittes eines Bogens verlaufend ausgestaltet ist. Dabei ist der Bogen bevorzugt konzentrisch um die Drehachse verlaufend ausgestaltet. Dieser Bogen lässt sich im Sinne der Erfindung auch als "Führungsbogen" bezeichnen und ist als virtueller Bogen zu verstehen.

Dabei ist es sinnvoll, wenn das Kulissenelement am Sitz, beispielsweise an einem Sitzunterbau, fest angeordnet und insbesondere nicht mit der Verstelleinrichtung bewegbar ist. Weiter ist es sinnvoll, wenn die Bedieneinrichtung und die Welle mittels eines Zwischenelements verbunden sind, wobei dieses Zwischenelement beispielsweise als Gehäuseteil ausgebildet ist. Innerhalb oder an diesem Zwischenelement sind beispielsweise weitere Elemente wie die Elektronikkomponenten, die Stromversorgung oder die Steuerung der Bedieneinrichtung angeordnet. Ebenfalls ist es sinnvoll, wenn die Lagerung der Welle mittels eines Lagerelements dieses Zwischenelements realisierbar ist.

Es ist weiterhin vorteilhaft, wenn die Drehachse beispielsweise mittels der Mittelachse einer zweiten Welle oder einer Buchse ausgestaltet ist und/ oder die Drehachse gegenüber dem Rest des Fahrzeugsitzes um sich selbst drehbar, ansonsten aber in keine Richtung verschiebbar angeordnet ist. Beispielsweise ist die Drehachse in einem Verbindungsstück oder Halteteil gelagert, welches wiederum mit dem Sitzunterbau fest oder starr verbunden ist.

Es ist dabei vorteilhaft, wenn das Führungselement hinsichtlich eines Querschnitts senkrecht zur Mittelachse der Welle im Wesentlichen die Form eines Doppeltrapezes aufweist. Unter dem Begriff Doppeltrapez ist zu verstehen, dass zwei Trapeze jeweils an ihrer ersten Grundlinie, bevorzugt jeweils an der Basis (also der längeren Grundlinie der beiden Grundlinien), miteinander verbunden sind und somit die Form des Doppeltrapezes bilden. Vorteilhaft sind beide Trapeze zueinander kongruent. Weiterhin ist bevorzugt jedes der beiden Trapeze gleichschenklig ausgebildet. Außerdem ist bevorzugt jedes der beiden Trapeze frei von einem rechten Winkel.

Besonders bevorzugt ist die zweite Grundlinie der Trapeze die kleinere der beiden Grundlinien. Dabei ist es bevorzugt, dass die zweite Grundlinie nicht linienförmig, sondern als bogenförmige Strecke ausgebildet ist, wobei bevorzugt die zwei durch die beiden zweiten Grundlinien der beiden Trapeze gebildeten bogenförmige Strecken auf einem gemeinsamen virtuellen Kreis liegen, dessen Mittelpunkt bevorzugt auf der gemeinsamen ersten Grundlinie der beiden Trapeze liegt. Es ist besonders bevorzugt, dass das Doppeltrapez eine erste Symmetrieachse aufweist, welche beispielsweise durch die gemeinsame erste Grundlinie ausgebildet ist. Ferner ist es bevorzugt, dass das Doppeltrapez eine zweite Symmetrieachse aufweist, welche beispielsweise durch den Mittelpunkt der gemeinsamen ersten Grundlinie, also dem Punkt auf der Hälfte der Streckenlänge der gemeinsamen ersten Grundlinie, verläuft und senkrecht zur gemeinsamen ersten Grundlinie ausgebildet ist.

Das Doppeltrapez weist also insgesamt bevorzugt sechs Ecken auf, wobei zwei erste Ecken die gemeinsame erste Grundlinie und jeweils zwei zweite Ecken jeweils eine der zweiten Grundlinien begrenzen. Es weist außerdem sechs Seitenkanten auf, wobei eine erste Seitenkante jeweils eine zweite Grundlinie ausbildet und zwischen jedem Ende der beiden ersten Seitenkanten jeweils zwei zweite Seitenkanten angeordnet sind. Es ergibt sich aus der vorherigen Beschreibung, dass an jedem der beiden gemeinsamen Enden der beiden zweiten Seitenkanten jeweils ein Ende der gemeinsamen Grundlinie angeordnet ist.

Innerhalb des oben beschriebenen ersten Anteils der Führungskulisse kann somit das Führungselement um einen bestimmten Winkel mechanisch sicher geführt verschwenkt werden. Dabei ist es bevorzugt, wenn die gemeinsame erste Grundlinie der beiden Trapeze bei einem Verschwenkvorgang der Welle um die Drehachse jeweils senkrecht zum Führungsbogen anordenbar ist. Diese Positionen (Referenzpositionen B) gehören somit zu den sogenannten Verstellpositionen des Führungselements. Bevorzugt sind die Referenzpositionen B die einzigen Verstellpositionen des Führungselements. Denkbar ist, dass die Anzahl der Verstellpositionen zumindest theoretisch unbegrenzt sind, da sich das Führungselement mittels der Verschwenkung der Welle um die Drehachse innerhalb des ersten Anteils von einem obersten Abschnitt der Führungskulisse bis zu einem untersten Abschnitt der Führungskulisse stufenlos bewegen lässt, wenn es sich in einer der Verstellpositionen befindet.

Weiterhin ist es wie oben beschrieben vorgesehen, dass die Führungskulisse zweite Anteile aufweist, welche angrenzend zum mindestens einen ersten Anteil der Führungskulisse angeordnet und im Wesentlichen dreiecksförmig ausgestaltet sind. Dabei ist es bevorzugt, wenn auf beiden Grenzseiten des ersten Anteils jeweils mindestens ein zweiter Anteil angeordnet ist, wobei die beiden Grenzseiten sich auf eine Position radial vor und auf eine Position radial hinter dem Führungsbogen beziehen.

Bevorzugt sind auf beiden Seiten des ersten Anteils jeweils mehrere zweite Anteile entlang einer Umfangsrichtung des Führungsbogens nacheinander angeordnet, wobei die Anzahl der zweiten Anteile auf beiden Seiten des ersten Anteils zueinander vorteilhaft gleich ist.

Vorteilhaft entspricht die Anzahl der zweiten Anteile auf einer Seite der Anzahl der Arretierpositionen des Führungselements. Die vorliegende Verstelleinrichtung ist also bevorzugt stufenbehaftet ausgebildet, da sie bevorzugt eine vorbestimmte Anzahl an Arretierpositionen aufweist. Sie ist bevorzugt nicht stufenlos ausgestaltet.

Weiterhin ist es bevorzugt, wenn eine erste Seite des im Wesentlichen dreiecksförmigen zweiten Anteils, weiter bevorzugt auf ihrer gesamten Länge, direkt angrenzend zum ersten Anteil ausgebildet ist. Eine zweite Seite des zweiten Anteils ist ferner bevorzugt linear ausgebildet. Eine dritte Seite des zweiten Anteils ist ferner bevorzugt bogenförmig ausgebildet, wobei der mittels der dritten Seite beschriebene Bogen sich ausgehend vom zweiten Anteil bevorzugt nach außen wölbend ausgestaltet ist. Es ist vorteilhaft, wenn die zweite und die dritte Seite des zweiten Anteils jeweils mittels einer kreisbogenabschnittförmigen Kante verbunden sind. Ferner gilt, dass die zweite und/ oder die dritte Seite bevorzugt jeweils mittels einer einzigen ihrer Ecken Kontakt mit der ersten Seite und damit mit dem ersten Abschnitt ausbilden.

Außerdem ist es bevorzugt, wenn die zweiten Anteile so angeordnet sind, dass - jeweils in Umfangsrichtung des Führungsbogens betrachtet - auf einer ersten der Grenzseiten zuerst jeweils die zweite Seite des zweiten Anteils und dann die dritte Seite des zweiten Anteils angeordnet ist und auf einer zweiten der Grenzseiten zuerst jeweils die dritte Seite des zweiten Anteils und dann die zweite Seite des zweiten Anteils angeordnet ist. Weiterhin bevorzugt sind alle zweiten Anteile zueinander jeweils beabstandet ausgebildet.

Im Zusammenspiel mit dem ersten Anteil kann innerhalb dieser zweiten Anteile das Führungselement gedreht und/ oder gelagert werden. Dabei ist die Lagerung des Führungselements bevorzugt mittels eines Anschlags zwischen mindestens einer der zweiten Seiten des zweiten Anteils der Führungskulisse und einer der zweiten Seitenkanten des Doppeltrapezes des Führungselements ausgebildet. Die bevorzugte lineare Ausführung der zweiten Seiten des zweiten Anteils ist also vorteilhaft, da der Anschlag zwischen der Führungskulisse und dem Führungselement besser ausgebildet werden und durch die mittels der zweiten Seite bereitstellbaren Lagerkräfte stabilisiert werden kann.

Eine Verstellung der Höhe der Bedieneinrichtung kann also erfolgen, indem das Führungselement innerhalb der Führungskulisse gedreht wird, bis es eine der Verstellpositionen erreicht. Anschließend kann es dem ersten Abschnitt folgend verschwenkt werden, bis es eine Position erreicht, gemäß welcher eine Arretierposition des Führungselements einstellbar ist. Durch Verschwenken des Führungselements innerhalb des ersten und des zweiten Anteils, bevorzugt lediglich um seine eigene Mittelachse, kann es von der Verstellposition in eine der Arretierpositionen wechseln.

Es ist verständlich, dass mit dem Führungselement sich die Welle und damit die gesamte Bedieneinrichtung mit verschwenkt, wenn es innerhalb des ersten Anteils entlang des Führungsbogens verschwenkt wird. Es ist bevorzugt, dass durch das Verschwenken des Führungselements innerhalb des ersten und des zweiten Anteils sich die Bedieneinrichtung nicht mit verschwenkt.

Gemäß einer bevorzugten Ausführungsvariante ist ein dritter Anteil der Führungskulisse vorgesehen, welcher kreisförmig und den ersten und/ oder die zweiten Anteile überlappend ausgestaltet ist. Dieser dritte Anteil dient dazu, die Montage der Verstelleinrichtung zu erleichtern, wenn die Welle vorteilhaft von der Seite des Kulissenelements durch die Führungskulisse und insbesondere durch den dritten Anteil der Führungskulisse hindurchführbar ist.

Bevorzugt ist das Führungselement innerhalb der Führungskulisse so anordenbar, dass mindestens eine als bogenförmige Strecke ausgebildete zweite Grundlinie des Doppeltrapezes konzentrisch ist zu einer der bogenförmig ausgebildeten dritten Seiten des zweiten Anteils. Diese Positionen (Referenzpositionen A) gehören zu den Positionen, in denen das Führungselement innerhalb der Führungskulisse arretierbar ist und welche somit als Arretierpositionen bezeichnet werden können. Bevorzugt sind die Referenzpositionen A die einzigen Arretierpositionen des Führungselements. Die Bogenform beider Seiten, also der zweiten Grundlinie des Doppeltrapezes des Führungselements und der dritten Seiten des zweiten Anteils der Führungskulisse, sind also vorteilhaft, da das Führungselement so zumindest um seine eigene Achse ohne Kollision innerhalb der Führungskulisse drehbar gelagert ist bzw. gedreht werden kann.

Außerdem ist die oben beschriebene Reihenfolge der zweiten und dritten Seiten der zweiten Anteile der Führungskulisse auf beiden Seiten des Führungsbogens vorteilhaft, da durch diese Anordnung gewährleistet ist, dass auf beiden Seiten der gemeinsamen ersten Grundlinie des Führungselements eine Anschlag- und/ oder Lagerungsmöglichkeit bereitgestellt ist. Außerdem ist es vorteilhaft, da auf beiden Seiten benachbart zu den zweiten Grundlinien des Führungselements eine Form der Führungskulisse bereitgestellt ist, welche zumindest in diesem Bereich komplementär zur Form des Führungselements ausgestaltet ist; dies erleichtert wie beschrieben die Drehung des Führungselements um die Mittelachse der Welle zum Erreichen der Rastposition.

Erfindungsgemäß ist also das Führungselement innerhalb der ersten und zweiten Anteile der Führungskulisse zumindest um die Mittelachse der Welle verschwenkbar, wobei mindestens zwei, bevorzugt drei Arretierpositionen des Führungselements innerhalb der Führungskulisse definiert sind.

Weiterhin vorteilhaft sind die Arretierpositionen des Führungselements dadurch definiert, dass Außenflächen des Führungselements mit zum Bogen geneigten Außenflächen der Führungskulisse in direktem Kontakt sind.

Es wäre also bereits durch die Lagerung des Führungselements mittels des Anschlags an der Führungskulisse eine Art Arretierung möglich. Bevorzugt ist jedoch, wenn eine Gewindemutter mit einem benachbart zum Führungselement angeordneten Außengewinde der Welle wechselwirkbar und insbesondere mittels einer Unterlegscheibe gegen eine Außenfläche des Kulissenelements konterbar ist. Somit ist für eine sichere Arretierung der Position der Verstelleinrichtung gesorgt.

Um die Bedienung der Verstelleinrichtung zu erleichtern, ist es vorteilhaft, wenn eine Mitnehmerscheibe zwischen einer zweiten Außenfläche des Kulissenelements und einer Flanschscheibe verdrehsicher gegenüber der Welle anordenbar ist, wobei die Mitnehmerscheibe an zumindest einer Umfangsstelle ein Anfasserelement aufweist. Beispielsweise ist das Anfasserelement in Form einer im Wesentlichen rechteckigen, im Winkel von 90° einfach gekanteten Blechlasche ausgebildet. Diese kann noch mit Rundungen an den Ecken ausgestaltet sein. Bevorzugt ist das Anfasserelement direkt kontaktierend zu einem Außenumfang der Mitnehmerscheibe angeordnet.

Bevorzugt ist die zweite Außenfläche des Kulissenelements gegenüberliegend von der ersten Außenfläche des Kulissenelements angeordnet.

Beispielsweise ist in Axialrichtung der Welle angrenzend zum Führungselement ein weiteres Wellenelement angeordnet und starr mit dem Führungselement verbunden. Beispielsweise kann die Mitnehmerscheibe mittels einer Verbindung aus Passfeder und entsprechenden Passfedernuten auf dem weiteren Wellenelement angeordnet sein. Alternativ dazu kann die Mitnehmerscheibe auf dem weiteren Wellenelement aufgeschweißt sein.

Dabei stellt die Mitnehmerscheibe mittels des Anfasserelements eine Möglichkeit dar, die Position des Führungselements in Bezug auf das Maß seiner Verdrehung in Umfangsrichtung der Welle indirekt zu erfassen. Dies ist möglich, da die Mitnehmerscheibe in Bezug auf die Welle und somit in Bezug auf das Führungselement verdrehsicher angeordnet ist; mit anderen Worten ist also gemäß der vorliegenden Erfindung vorteilhaft vorgesehen, dass eine Relativposition des Anfasserelements gegenüber dem Führungselement zumindest in Umfangsrichtung unveränderlich und/ oder starr ausgebildet ist.

Beispielsweise weist ein Winkel zwischen einer virtuellen ersten Ebene, welche durch die Mittelachse der Welle und durch eine Mittelachse oder Symmetrieachse des Anfasserelements aufgespannt ist, und einer virtuellen zweiten Ebene, welche durch die Mittelachse der Welle und einer zur gemeinsamen ersten Grundlinie der beiden Trapeze des Doppeltrapezes senkrechten Achse aufgespannt wird, einen Wert aus einem Bereich von 0 bis 90°, bevorzugt von 45° auf.

Die beschriebene feste Relativposition ist sinnvoll, da der Benutzer beim Verstellen der Verstelleinrichtung, also beim Bewegen des Führungselements innerhalb der Führungskulisse, unter Umständen keinen direkten Blick auf das Führungselement werfen kann, da dieses beispielsweise von dem Kulissenelement und/ oder von der Bedieneinrichtung zumindest teilweise verdeckt angeordnet ist.

Anhand der Winkelposition des Anfasserelements gegenüber dem Rest des Fahrzeugsitzes oder beispielsweise gegenüber einer Markierung auf der zweiten Außenfläche kann der Benutzer jedoch erkennen, in welcher Winkelposition sich das Führungselement befindet, und insbesondere, ob sich das Führungselement in einer der Arretierpositionen oder in einer der Verstellpositionen befindet. Bevorzugt ist also eine Winkelposition des Führungselements in Bezug auf eine Verschwenkung um die mit dem Führungselement starr verbundene Welle mittels einer Erfassung der Winkelposition des Anfasserelements bestimmbar.

Dabei kann die Markierung auf der zweiten Außenfläche, welche beispielsweise als Lasermarkierung ausgestaltet ist, beispielsweise eine erste Markierlinie umfassen, welche zumindest eine der Arretierpositionen kennzeichnet, und/ oder eine zweite Markierlinie, welche zumindest eine der Verstellpositionen kennzeichnet. Dabei ist es beispielsweise möglich, dass bei insgesamt drei möglichen Arretierpositionen die zumindest eine Arretierposition die in Bezug auf die Verschwenkung des Führungselements entlang des ersten Abschnitts der Führungskulisse mittlere Arretierposition darstellt. Gleiches gilt analog für die zumindest eine Verstellposition.

Vorteilhaft verlaufen diese Markierlinien dabei jeweils parallel zu der zur gemeinsamen ersten Grundlinie der beiden Trapeze des Doppeltrapezes senkrechten Achse des Führungselements, wenn das Führungselement sich in der einen Arretierposition gemäß der Referenzposition A (erste Markierlinie) oder in der einen Verstellposition gemäß der Referenzposition B (zweite Markierlinie) befindet. Beispielsweise bilden die beiden Linien zueinander einen Winkel von 45°.

Gemäß einer alternativen Ausführungsform verlaufen diese Markierlinien vorteilhaft so, dass sie die Stellung kennzeichnen, in die der Benutzer das Anfasserelement drehen muss, um entweder die Arretierposition oder die Verstellposition des Führungselements einzustellen. Dazu ist es möglich, die Markierlinien jeweils parallel zu dem Verlauf auszurichten, den die virtuelle erste Ebene projiziert auf dem Kulissenelement annehmen muss, wenn das Führungselement sich in einer der Referenzpositionen A oder in einer der Referenzpositionen B befinden soll.

Das Anfasserelement bietet dem Benutzer zudem die Möglichkeit, die Welle und damit das mit ihr starr verbundene Führungselement mittels einer Verdrehung des Anfasserelements zu verdrehen.

Es ist vorteilhaft, wenn die Flanschscheibe in Richtung der Mittelachse der Welle angeordnet und mit dem Führungselement starr verbunden ist. Beispielsweise kann die Flanschscheibe indirekt mit dem Führungselement über das weitere Wellenelement verbunden sein. Die Flanschscheibe dient vorteilhaft als Gegenlager zur Mitnehmerscheibe in axialer Richtung der Welle.

Die Baugruppe umfassend die Flanschscheibe, das weitere Wellenelement, das Führungselement und/ oder die Welle wird im Sinne der vorliegenden Erfindung als Wellenbaugruppe bezeichnet. Wie oben beschrieben sind vorteilhaft alle Elemente dieser Wellenbaugruppe starr miteinander verbunden.

Weitere Vorteile, Ziele und Eigenschaften vorliegender Erfindung werden anhand anliegender Zeichnung und nachfolgender Beschreibung erläutert, in welchen beispielhaft ein Fahrzeugsitz mit einer erfindungsgemäßen Verstelleinrichtung dargestellt und beschrieben ist. In der Zeichnung zeigen:
- Fig. 1a-c: schematisch mehrere Ansichten eines Fahrzeugsitzes mit einer Bedieneinrichtung und einer Verstelleinrichtung;
- Fig. 2a-e: schematisch mehrere Ansichten der Verstelleinrichtung aus Fig. 1 im Detail oder im Querschnitt;
- Fig. 3a-f: schematisch die Verstelleinrichtung aus Fig. 1 mit ausgeblendeter Bedieneinrichtung sowie mehrere Verstellpositionen von dieser Verstelleinrichtung;
- Fig. 4a-c: schematisch die Verstelleinrichtung aus Fig. 1 mit ausgeblendeter Bedieneinrichtung in perspektivischen Ansichten;
- Fig. 5a, b: schematisch die Verstelleinrichtung aus Fig. 4a-c in weiteren perspektivischen Ansichten;
- Fig. 5c: schematisch die Relativposition zwischen Führungselement und Anfasserelement;
- Fig. 6a: eine Detailansicht eines Querschnitts des Führungselements; und
- Fig. 6b: eine Detailansicht des zweiten Anteils der Führungskulisse.

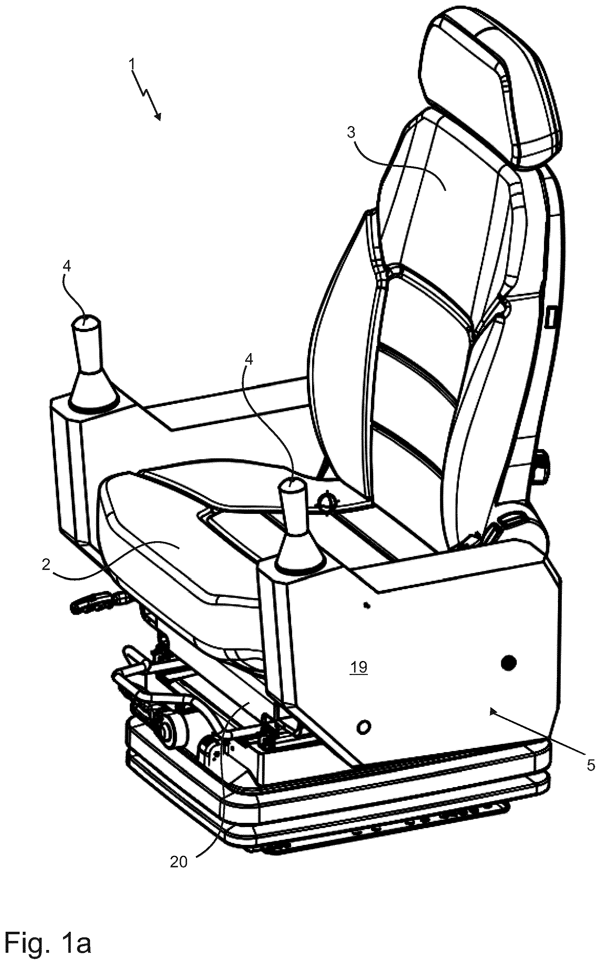

Eine mögliche Ausführungsform des erfindungsgemäßen Fahrzeugsitzes ist in den Figuren 1a bis 1c abgebildet. Mittels des abgebildeten Koordinatensystems sind die Sitzlängsrichtung 1x, die Sitzbreitenrichtung 1y und die Sitzhöhenrichtung 1z veranschaulicht.

Der Fahrzeugsitz 1 weist beispielsweise ein Sitzteil 2 und ein Rückenlehnenteil 3 auf. An beiden Seiten des Fahrzeugsitzes 1 ist jeweils eine Bedieneinrichtung 4 zum Bedienen von Fahrzeugsitz- und/ oder Fahrzeugfunktionen, vorliegend in Form eines Joysticks, und jeweils eine Verstelleinrichtung 5 zur Verstellung einer vertikalen Position und/ oder eines Neigungsgrades der Bedieneinrichtung 4 angeordnet.

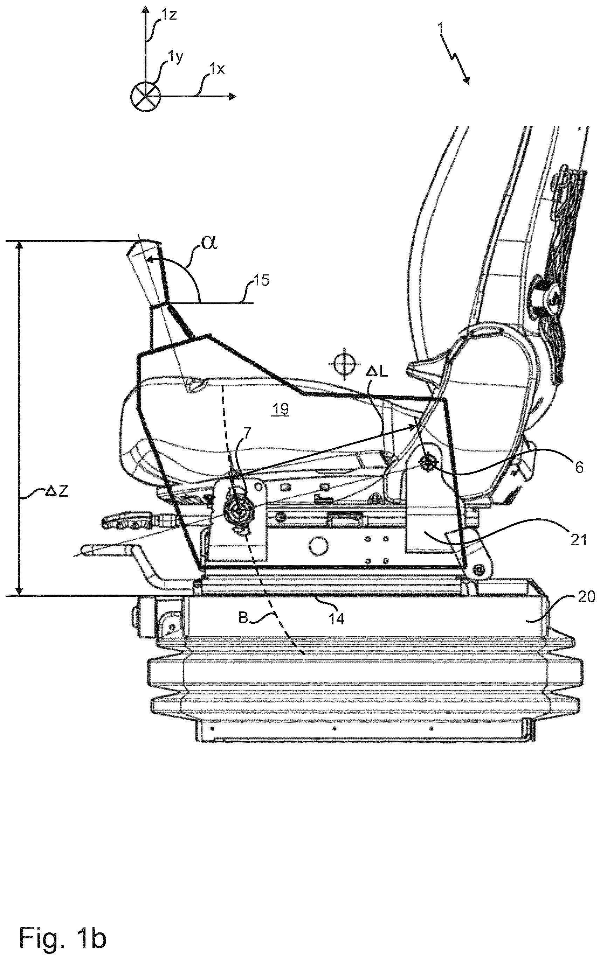

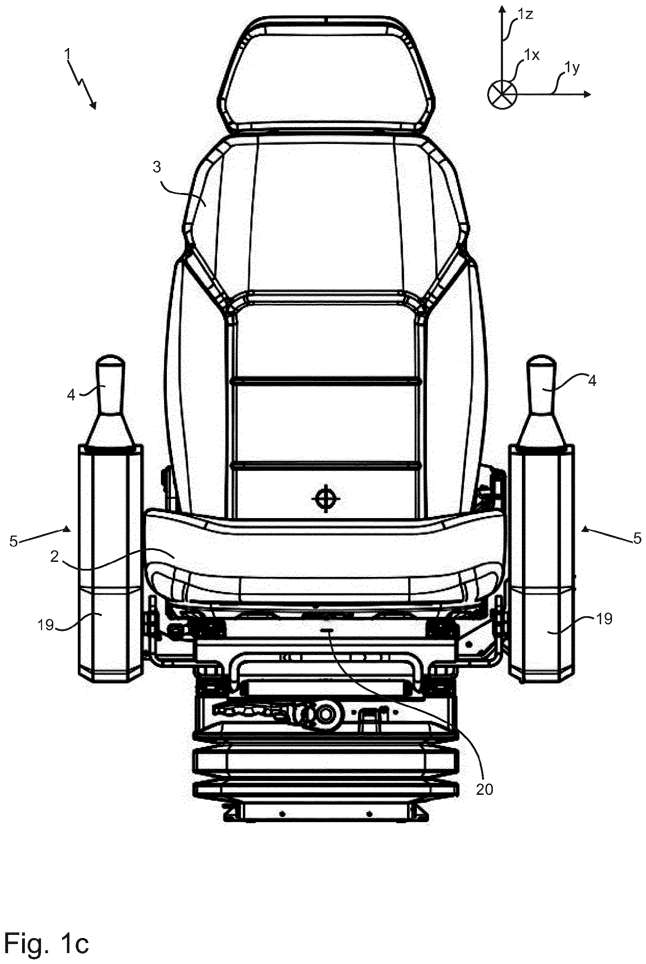

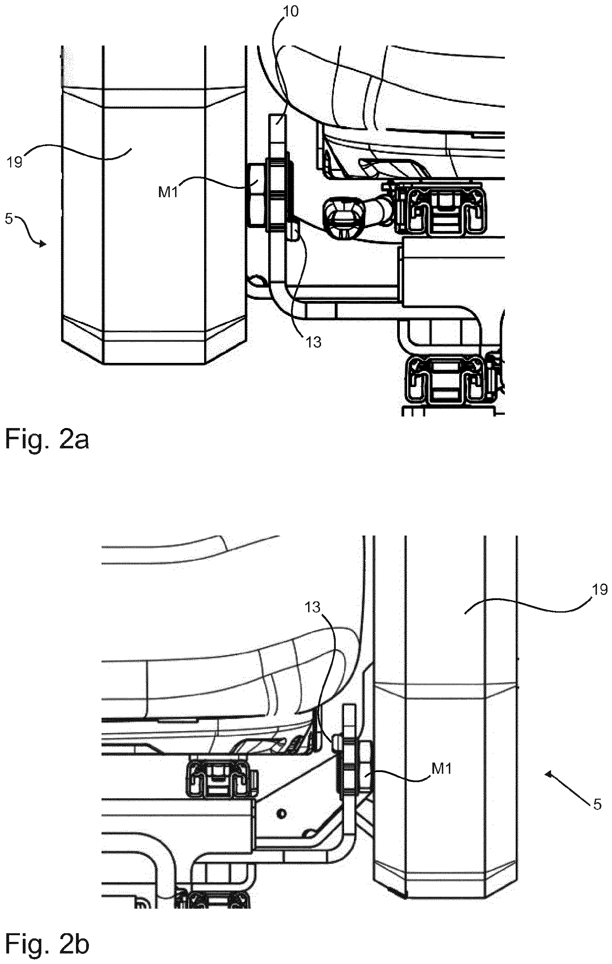

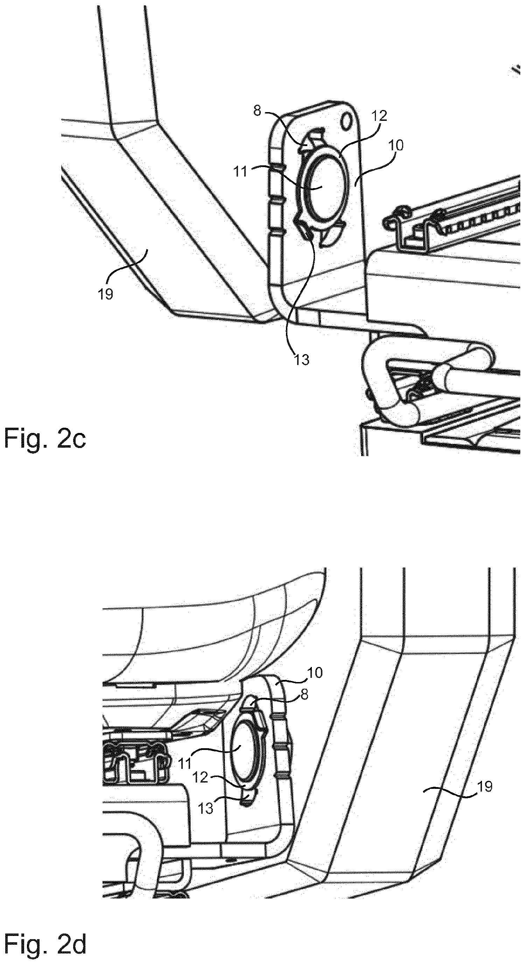

Vorab sei erwähnt, dass die Figuren 1a und 1c beide Seiten des Fahrzeugsitzes 1 zeigen. Die Figuren 1b, 2b, 2d, 2e, 3a-3f, 4a, 4c und 5b zeigen die aus Sicht des Sitzinsassen linke Seite des Fahrzeugsitzes 1. Die Figuren 2a, 2c, 4b und 5a zeigen die aus Sicht des Sitzinsassen rechte Seite des Fahrzeugsitzes 1.

Dabei sind ein Abstand Δz zwischen einem höchsten Punkt der Bedieneinrichtung 4 und einer gegenüber dem Unterbau des Sitzes festen und horizontal angeordneten Referenzfläche 14 sowie ein Winkel α zwischen einer Mittelachse der Bedieneinrichtung 4 und einer zur Referenzfläche 14 parallelen Referenzebene 15 eingezeichnet, welche als Bezug für die vertikale Position und/ oder des Neigungsgrades der Bedieneinrichtung 4 dienen können.

Das Kulissenelement 10 ist vorliegend an einem Sitzunterbau 20 fest angeordnet und mit der Verstelleinrichtung 5 weder bewegbar noch verschwenkbar. Weiter sind die Bedieneinrichtung 4 und die Welle 7 mittels eines Zwischenelements 19 verbunden, wobei dieses Zwischenelement 19 vorliegend als Gehäuseteil ausgebildet ist. Innerhalb dieses Gehäuseteils sind beispielsweise nicht gezeigte weitere Elemente wie die Elektronikkomponenten, die Stromversorgung oder eine der Bedieneinrichtung 4 zugeordnete Steuerungseinheit angeordnet.

Die Verstelleinrichtung 5 umfasst erfindungsgemäß eine in Sitzbreitenrichtung 1y verlaufende Drehachse 6 und eine mit der Bedieneinrichtung 4 verbundene Welle 7, welche beabstandet zur Drehachse 6 und zusammen mit der Bedieneinrichtung 4 um diese verschwenkbar angeordnet ist. Die Drehachse 6 ist vorliegend mittels einer Mittelachse einer zweiten Welle ausgebildet und in einem Halteteil 21 gelagert. Das Halteteil 21 ist fest mit dem Sitzunterbau 20 verbunden. Die Drehachse 6 ist somit gegenüber dem Rest des Fahrzeugsitzes 1 um sich selbst drehbar, ansonsten aber in keine Richtung verschiebbar angeordnet.

Dabei ist ein Abstand ΔL (siehe Fig. 1b) zwischen der Drehachse 6 und der Welle 7 fest eingestellt und die Drehachse 6 in Sitzlängsrichtung 1x hinter der Welle 7 und in Sitzhöhenrichtung 1z oberhalb von der Welle 7 angeordnet.

Veranschaulicht ist in Fig. 1b ein virtueller Bogen B, welcher konzentrisch um die Drehachse 6 verlaufend angeordnet ist, und den Führungsbogen darstellt.

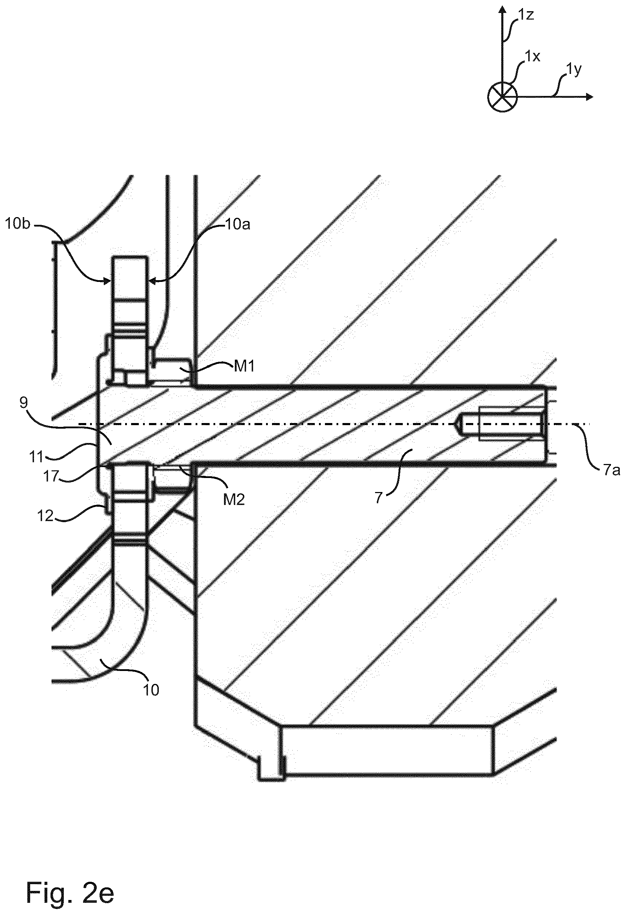

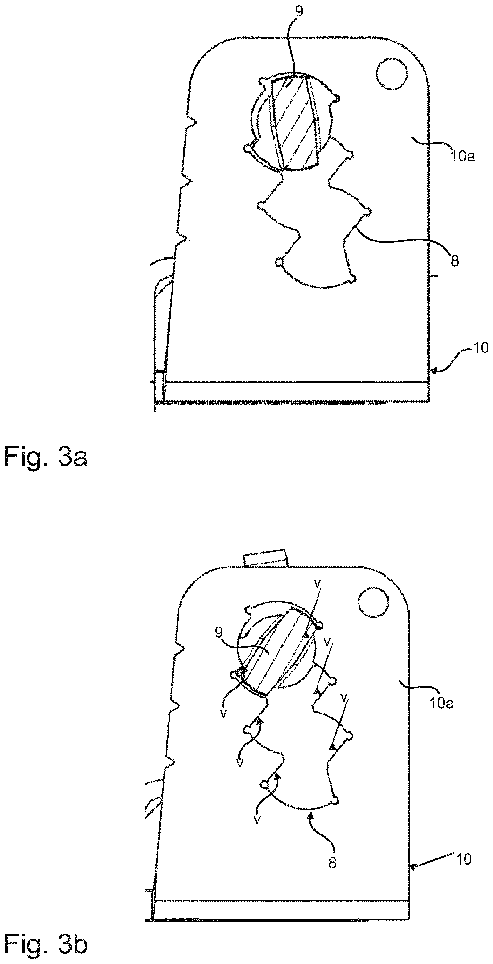

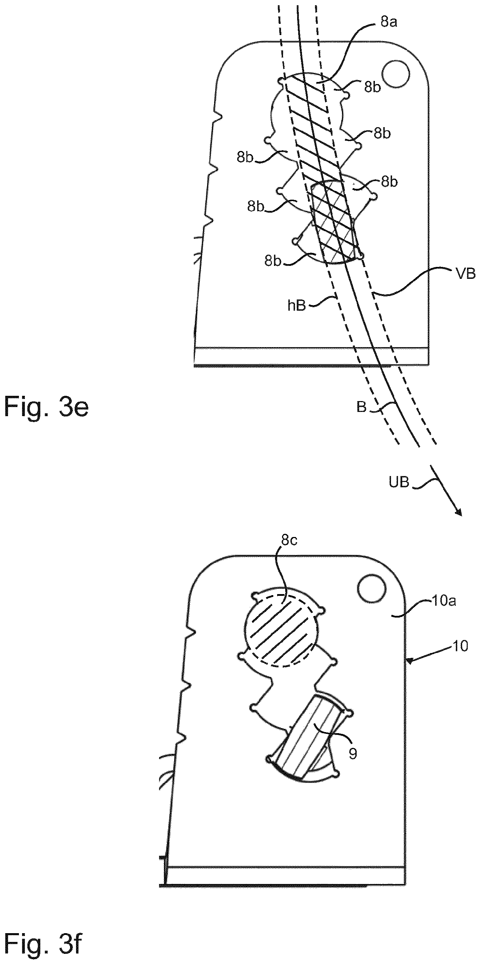

Insbesondere aus den Figuren 2e und 3a bis 3f geht hervor, dass ein Führungselement 9, welches in Richtung einer Mittelachse 7a der Welle 7 angeordnet und mit der Welle 7 starr verbunden ist, hinsichtlich der Verschwenkung der Welle 7 um die Drehachse 6 innerhalb einer Führungskulisse 8 eines Kulissenelements 10 bewegbar ist, wobei die Führungskulisse 8 einen ersten Anteil 8a aufweist, dessen Form entlang eines Abschnittes des Bogens B (siehe hier auch Fig. 3e) verlaufend ausgestaltet ist. Es ist ferner eine Umfangsrichtung UB des Bogens B veranschaulicht.

Gemäß dem gezeigten Ausführungsbeispiel weist die Führungskulisse 8 auch zweite Anteile 8b auf, welche angrenzend zum mindestens einen ersten Anteil 8a angeordnet und im Wesentlichen dreiecksförmig ausgestaltet sind (siehe insbesondere Fig. 3e).

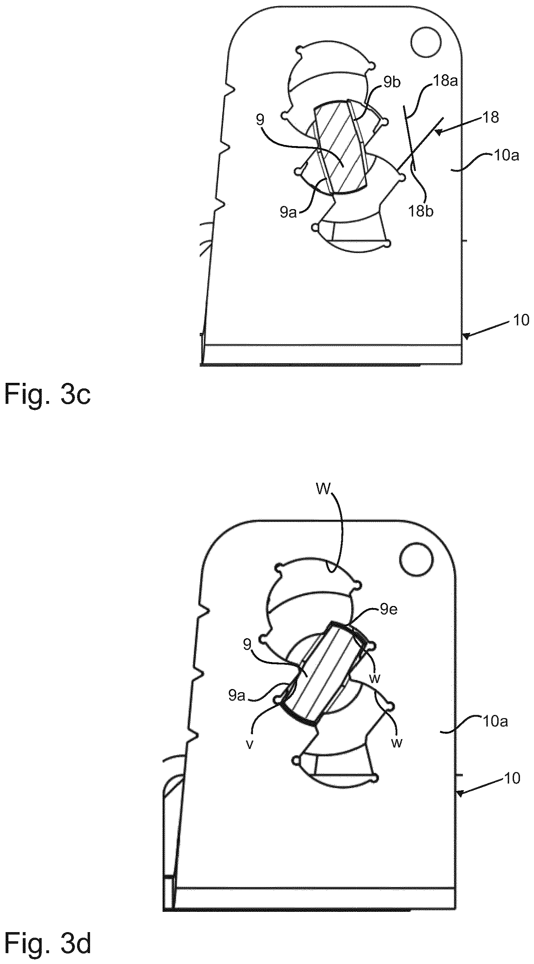

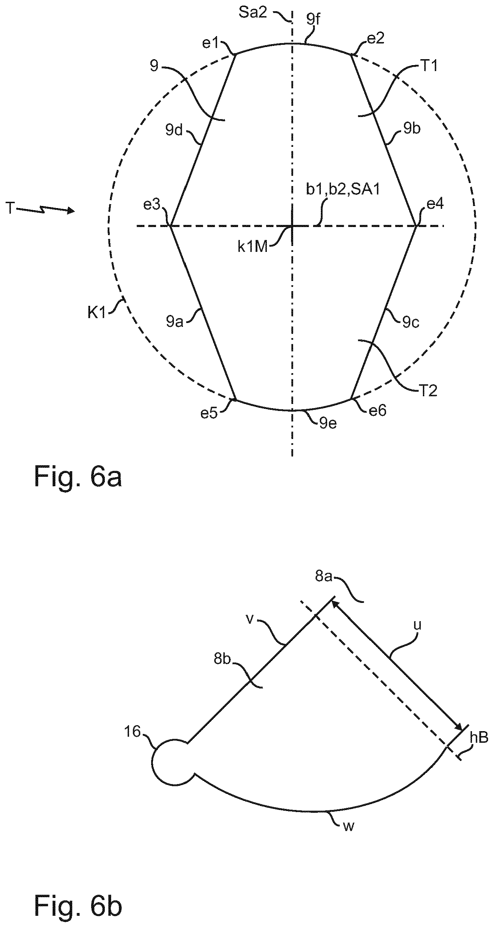

Vorliegend ist das Führungselement 9 innerhalb der ersten 8a und zweiten Anteile 8b der Führungskulisse 8 zumindest um die Mittelachse 7a der Welle 7 verschwenkbar, wobei drei Arretierpositionen des Führungselements 9 innerhalb der Führungskulisse 8 definiert sind. Diese sind gemäß den Fig. 3b, 3d und 3f veranschaulicht und dadurch definiert, dass Außenflächen 9a, 9b des Führungselements 9 (siehe Fig. 3c) mit zum Bogen (B) geneigten Außenflächen v der Führungskulisse 8 (siehe Fig. 3b und Fig. 6b) in direktem Kontakt sind.

Aus Gründen der Übersichtlichkeit werden die Außenflächen 9a, 9b und v nicht in jeder der Figuren dargestellt. Es gilt, dass bei Drehung des Führungselements 9 um 180° die gezeigten Außenflächen 9a und 9b hinsichtlich ihrer Anschlagfunktion vertauschbar sind.

Vorliegend weist das Führungselement 9 hinsichtlich eines Querschnitts senkrecht zur Mittelachse 7a der Welle 7 (wie gemäß den Figuren 3a bis 3f) im Wesentlichen die Form eines Doppeltrapezes T auf (siehe insbesondere Detailansicht gemäß Fig. 6a). Demnach sind zwei Trapeze T1, T2 jeweils an ihrer ersten Grundlinie b1, b2, vorliegend jeweils an der Basis (also der längeren Grundlinie der beiden Grundlinien), miteinander verbunden und bilden somit das Doppeltrapez. Es sind beide Trapeze T1, T2 zueinander kongruent. Weiterhin ist jedes der beiden Trapeze T1, T2 gleichschenklig ausgebildet; die mittels der Außenflächen 9a und 9c gebildeten Seitenkanten sowie die mittels der Außenflächen 9d und 9b gebildeten Seitenkanten sind jeweils zueinander gleich lang. Außerdem ist jedes der beiden Trapeze T1, T2 frei von einem rechten Winkel.

Vorliegend ist die mittels der Außenflächen 9e, 9f gebildete zweite Grundlinie der Trapeze T1, T2 die kleinere der beiden Grundlinien 9e, 9f, b1, b2. Dabei ist diese zweite Grundlinie nicht linienförmig, sondern als bogenförmige Strecke ausgebildet, wobei beide mittels der zweiten Grundlinien gebildeten bogenförmige Strecken auf einem gemeinsamen virtuellen Kreis K1 liegen, dessen Mittelpunkt K1M auf der gemeinsamen ersten Grundlinie b1, b2 der beiden Trapeze T1, T2 liegt.

Das Doppeltrapez T weist also insgesamt bevorzugt sechs Ecken e1, e2, e3, e4, e5, e6 auf, wobei zwei erste Ecken e3, e4 die gemeinsame erste Grundlinie b1, b2 und jeweils zwei zweite Ecken e1, e2; e5, e6 jeweils eine der zweiten Grundlinien (siehe Außenflächen 9e, 9f) begrenzen. Es weist außerdem sechs Seitenkanten auf, welche mittels der Außenflächen 9a, 9b, 9c, 9d, 9e, 9f gebildet sind, wobei eine erste Seitenkante (Außenflächen 9e, 9f) jeweils eine zweite Grundlinie ausbildet und zwischen jedem Ende der beiden ersten Seitenkanten bzw. jeder Ecke e1, e2; e5, e6 jeweils zwei zweite Seitenkanten (Außenflächen 9a, 9d; 9c, 9b) angeordnet sind. Es ergibt sich aus der vorherigen Beschreibung, dass an jedem der beiden gemeinsamen Enden e3, e4 der beiden zweiten Seitenkanten jeweils ein Ende der gemeinsamen Grundlinie b1, b2 angeordnet ist.

Innerhalb des ersten Anteils 8a kann somit das Führungselement 9 um einen bestimmten Winkel mechanisch sicher geführt verschwenkt werden. Dabei ist die gemeinsame erste Grundlinie b1, b2 der beiden Trapeze T1, T2 bei einem Verschwenkvorgang der Welle 7 um die Drehachse 6 jeweils senkrecht zum Führungsbogen B anordenbar.

Gemäß der Fig. 3e ist gezeigt, dass auf beiden Grenzseiten des ersten Anteils 8a jeweils drei zweite Anteile 8b angeordnet sind, wobei die beiden Grenzseiten sich auf eine Position radial vor und auf eine Position radial hinter dem Führungsbogen B beziehen, welche vorliegend mittels zweier virtueller Bögen hB, vB veranschaulicht sind. Die Bögen hB, vB und damit die Grenzseiten des ersten Anteils 8a verlaufen dabei jeweils konzentrisch zum Bogen B.

Auf beiden Seiten des ersten Anteils 8a sind also jeweils mehrere zweite Anteile 8b entlang einer Umfangsrichtung UB des Führungsbogens B nacheinander angeordnet, wobei die Anzahl der zweiten Anteile 8b auf beiden Seiten des ersten Anteils 8a gleich ist und vorliegend drei beträgt. Damit entspricht die Anzahl der zweiten Anteile 8b auf einer Seite des ersten Anteils 8a der Anzahl der Arretierpositionen des Führungselements 9.

Die vorliegende Verstelleinrichtung 5 ist also stufenbehaftet ausgebildet und weist vorliegend drei Stufen auf. Sie ist damit logischerweise nicht stufenlos ausgestaltet.

Fig. 6b zeigt eine Vergrößerung eines Übergangs zwischen einem der zweiten Anteile 8b und dem ersten Anteil 8a gemäß den Figuren 3a bis 3f. Dabei ist eine erste Seite u des im Wesentlichen dreiecksförmigen zweiten Anteils 8b direkt angrenzend zum ersten Anteil 8a ausgebildet; die Grenze wird hierbei durch einen Abschnitt des virtuellen Bogens hB gebildet. Eine zweite Seite (gebildet mittels der Außenfläche v) des zweiten Anteils 8b ist linear ausgebildet. Eine dritte Seite (gebildet mittels der Außenfläche w) des zweiten Anteils 8b ist bogenförmig ausgebildet. Die zweite und die dritte Seite des zweiten Anteils 8b sind mittels einer kreisbogenabschnittförmigen Kante 16 verbunden. Wenn die Führungskulisse 8 vorteilhaft mittels Laserschnitt im Kulissenelement 10 erzeugt wird, hilft das Vorsehen dieser Kante 16, die Bildung von Fehlstellen im Übergang zwischen der zweiten und dritten Seite zu vermeiden. Besonders relevante Fehlstellen sind dabei unerwünschte Vorsprünge an der Berandung der Führungskulisse 8, welche die Bewegung des Führungselements 9 innerhalb der Führungskulisse 8 behindern können.

Es geht aus den Figuren 3a bis 3f und aus der Fig. 6b hervor, dass die zweiten Anteile 8b so angeordnet sind, dass - jeweils in Umfangsrichtung UB des Führungsbogens B betrachtet - auf einer ersten hB der Grenzseiten hB, vB zuerst jeweils die zweite Seite des zweiten Anteils 8b und dann die dritte Seite des zweiten Anteils 8b angeordnet ist und auf einer zweiten vB der Grenzseiten hB, vB zuerst jeweils die dritte Seite des zweiten Anteils 8b und dann die zweite Seite des zweiten Anteils 8b angeordnet ist. Außerdem ist zu sehen, dass die zweiten Anteile 8b zueinander jeweils beabstandet ausgebildet sind.

Im Zusammenspiel mit dem ersten Anteil 8a kann innerhalb dieser zweiten Anteile 8b das Führungselement 9 gedreht und/ oder gelagert werden. Dabei ist die Lagerung des Führungselements 9 vorliegend mittels eines Anschlags zwischen mindestens einer der zweiten Seiten (mittels Außenflächen v gebildet) des zweiten Anteils 8b der Führungskulisse 8 und einer der zweiten Seitenkanten (mittels Außenflächen 9a, 9b gebildet) des Doppeltrapezes T des Führungselements 9 ausgebildet (siehe insbesondere Fig. 3d).

Es ist ein dritter Anteil 8c der Führungskulisse 8 vorgesehen, welcher kreisförmig und den ersten 8a und/ oder die zweiten Anteile 8b überlappend ausgestaltet ist. Dieser dritte Anteil 8c ist gemäß Fig. 3f in Form einer schraffierten Kreisfläche veranschaulicht und dient dazu, die Montage der Verstelleinrichtung 5 zu erleichtern, da die Welle 7 von der Seite des Kulissenelements 10 durch die Führungskulisse 8 und insbesondere durch den dritten Anteil 8c der Führungskulisse 8 hindurchführbar ist.

Vorliegend ist das Führungselement 9 innerhalb der Führungskulisse 8 so anordenbar, dass mindestens eine als bogenförmige Strecke ausgebildete zweite Grundlinie (siehe Außenflächen 9e, 9f) des Doppeltrapezes T konzentrisch ist zu einer der bogenförmig ausgebildeten dritten Seiten w des zweiten Anteils 8b (siehe hier insbesondere Fig. 3d).

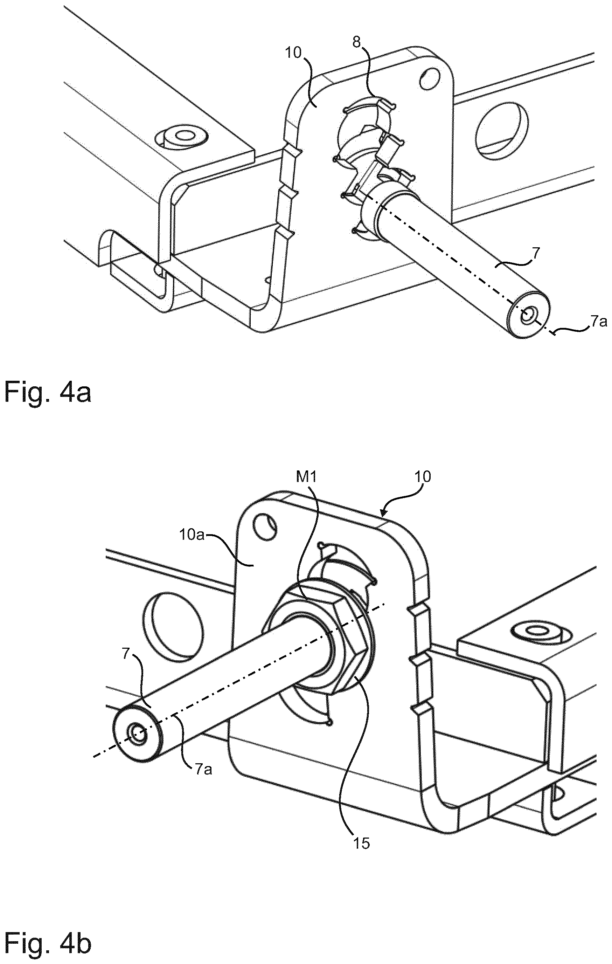

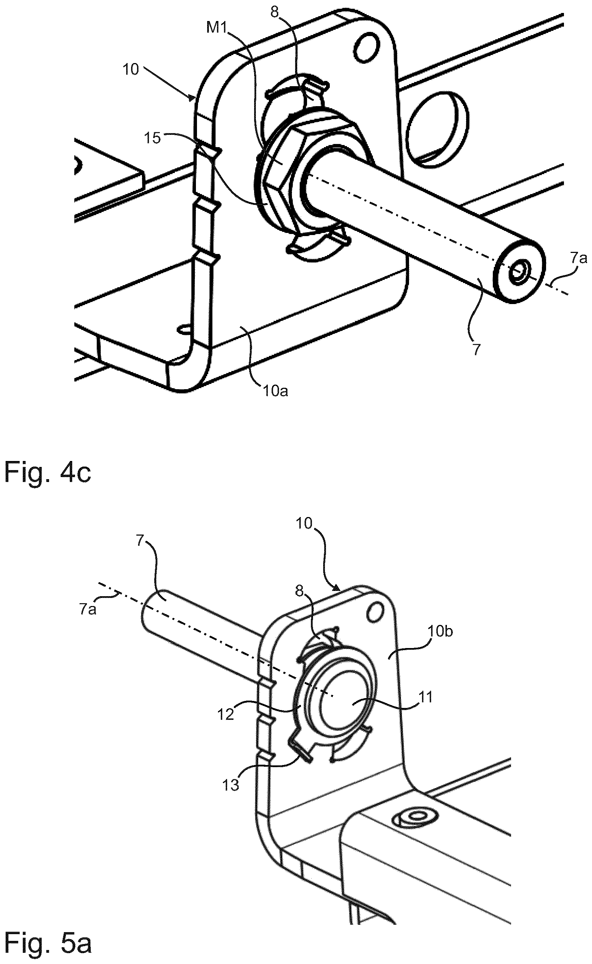

Insbesondere gemäß den Figuren 2e, 4b und 4c ist gezeigt, dass eine Gewindemutter M1 mit einem benachbart zum Führungselement 9 angeordneten Außengewinde M2 (siehe Fig. 2e) der Welle 7 wechselwirkbar und mittels einer Unterlegscheibe 15 gegen eine erste Außenfläche 10a des Kulissenelements 10 konterbar ist.

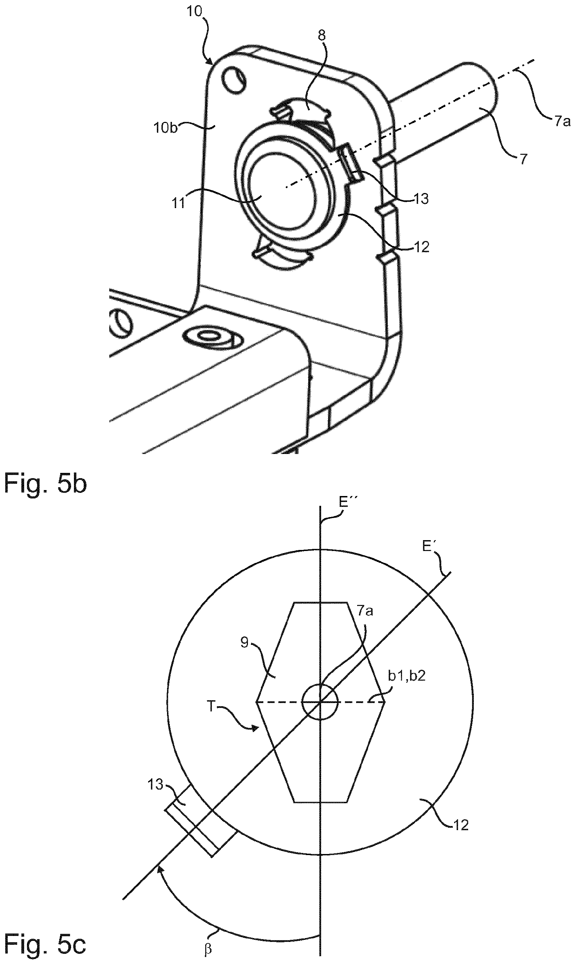

Die Figuren 5a und 5b zeigen insbesondere, dass eine Mitnehmerscheibe 12 zwischen einer zweiten Außenfläche 10b des Kulissenelements 10 und einer Flanschscheibe 11 angeordnet ist, wobei die Mitnehmerscheibe 12 an zumindest einer Umfangsstelle ein Anfasserelement 13 aufweist. Es ist eine Verbindung (beispielsweise eine Passfeder- und Passfedernutverbindung), mittels der die Mitnehmerscheibe 12 verdrehsicher gegenüber der Welle 6 angeordnet ist, ausgebildet, jedoch in den Figuren nicht gezeigt.

Vorliegend ist die Flanschscheibe 11 in Richtung der Mittelachse 7a der Welle 7 angeordnet und mit dem Führungselement 9 starr verbunden.

Vorliegend ist das Anfasserelement 13 in Form einer im Wesentlichen rechteckigen, im Winkel von 90° einfach gekanteten Blechlasche ausgebildet. Diese ist vorliegend noch mit Rundungen an den Ecken ausgestaltet. Vorliegend ist das Anfasserelement 13 direkt kontaktierend zu einem Außenumfang der Mitnehmerscheibe 12 angeordnet.

Vorliegend ist in Axialrichtung 7a der Welle 7 angrenzend zum Führungselement 9 ein weiteres Wellenelement 17 angeordnet und starr mit dem Führungselement 9 verbunden. Vorliegend ist die Mitnehmerscheibe 12 mittels einer Verbindung aus Passfeder und entsprechender Passfedernut auf dem weiteren Wellenelement 17 angeordnet.

Fig. 5c zeigt, dass ein Winkel β zwischen einer virtuellen ersten Ebene E', welche durch die Mittelachse 7a der Welle 7 und durch eine Mittelachse oder Symmetrieachse des Anfasserelements 13 aufgespannt ist, und einer virtuellen zweiten Ebene E", welche durch die Mittelachse 7a der Welle 7 und einer zur gemeinsamen ersten Grundlinie b1, b2 der beiden Trapeze T1, T2 des Doppeltrapezes T senkrechten Achse aufgespannt wird, einen Wert von 45° aufweist. Um die Übersichtlichkeit zu gewährleisten, sind gemäß der Fig. 5c nicht alle Elemente der vorliegenden Verstelleinrichtung 5, sondern nur die Achse 7a der Welle 7, die Mitnehmerscheibe 12, das Anfasserelement 13 sowie das Führungselement 9 mit der Grundlinie b1, b2 in ihrer Relativposition zueinander veranschaulicht.

Die Figuren 2a bis 2d zeigen, dass der Benutzer beim Verstellen der Verstelleinrichtung 5, also beim Bewegen des Führungselements 9 innerhalb der Führungskulisse 8, vorliegend keinen direkten Blick auf das Führungselement 9 werfen kann, da dieses zumindest teilweise verdeckt angeordnet ist.

Eine als Lasermarkierung ausgestaltete Markierung 18 auf der zweiten Außenfläche 10b, umfasst eine erste Markierlinie 18a, welche die mittlere der Arretierpositionen kennzeichnet, und eine zweite Markierlinie 18b, welche die mittlere der Verstellpositionen kennzeichnet. Diese Markierlinie 18 ist der Einfachheit halber gemäß der Fig. 3c auf der Fläche 10a als Kombination zweier durchgezogener Linien eingezeichnet. In der Realität ist der Verlauf der Markierung so wie gezeigt ausgestaltet, aber als Projektion auf der zweiten Außenfläche 10b und vorteilhaft in Form gestrichelter Linien.

Diese Markierlinien 18a, 18b verlaufen dabei jeweils parallel zu der zur gemeinsamen ersten Grundlinie b1, b2 der beiden Trapeze T1, T2 des Doppeltrapezes T senkrechten Achse des Führungselements 9, wenn das Führungselement 9 sich in der einen Arretierposition gemäß der Referenzposition A (erste Markierlinie 18a, siehe Fig. 3d) oder in der einen Verstellposition gemäß der Referenzposition B (zweite Markierlinie 18b, siehe Fig. 3c) befindet. Vorliegend bilden die beiden Linien 18a, 18b zueinander einen Winkel von 45°.

Es versteht sich, dass es sich bei dem vorstehend erläuterten Ausführungsbeispiel lediglich um eine erste Ausgestaltung des erfindungsgemäßen Nutzfahrzeugsitzes handelt. Insofern beschränkt sich die Ausgestaltung der Erfindung nicht auf dieses Ausführungsbeispiel.

### Bezugszeichenliste

- 1: Fahrzeugsitz
- 1x: Sitzlängsrichtung
- 1y: Sitzbreitenrichtung
- 1z: Sitzhöhenrichtung
- 2: Sitzteil
- 3: Rückenlehnenteil
- 4: Bedieneinrichtung
- 5: Verstelleinrichtung
- 6: Drehachse
- 7: Welle
- 7a: Mittelachse
- 8: Führungskulisse
- 8a, 8b, 8c: Anteil
- 8i, 8j, 8k, 8l: Außenflächen
- 9: Führungselement
- 9a, 9b, 9c, 9d: Außenflächen
- 10: Kulissenelement
- 10a, 10b: Außenfläche
- 11: Flanschscheibe
- 12: Mitnehmerscheibe
- 13: Anfasserelement
- 14: Referenzfläche
- 15: Unterlegscheibe
- 16: Kante
- 17: Wellenelement
- 18: Markierung
- 18a, 18b: Markierlinie
- 19: Zwischenelement
- 20: Sitzunterbau
- 21: Halteteil
- B: Bogen
- b1, b2: erste Grundlinie
- e1-e6: Ecke
- hB, vB: Position
- K1: virtueller Kreis
- K1M: Mittelpunkt
- M1: Gewindemutter
- M2: Außengewinde
- SA1, SA2: Symmetrieachse
- T: Doppeltrapez
- T1, T2: Trapez
- u, v, w: Seiten
- UB: Umfangsrichtung
- α, β: Winkel

## Patentansprüche

1. Fahrzeugsitz (1) mit einer seitlich angeordneten Bedieneinrichtung (4) zum Bedienen von Fahrzeugsitz- und/ oder Fahrzeugfunktionen und einer Verstelleinrichtung (5) zur Verstellung einer vertikalen Position (Δz) und/ oder eines Neigungsgrades (α) der Bedieneinrichtung (4) gegenüber einem Rest des Fahrzeugsitzes (1),
wobei die Verstelleinrichtung (5) eine in Sitzbreitenrichtung (1y) verlaufende Drehachse (6) und eine mit der Bedieneinrichtung (4) verbundene Welle (7) umfasst, welche beabstandet zur Drehachse (6) und zusammen mit der Bedieneinrichtung (4) um diese verschwenkbar angeordnet ist,
**dadurch gekennzeichnet, dass**
ein Führungselement (9), welches in Richtung einer Mittelachse (7a) der Welle (7) angeordnet und mit der Welle (7) starr verbunden ist, hinsichtlich der Verschwenkung der Welle (7) um die Drehachse (6) innerhalb einer Führungskulisse (8) eines Kulissenelements (10) bewegbar ist,
wobei die Führungskulisse (8) zumindest einen ersten Anteil (8a) aufweist, dessen Form entlang eines Abschnittes eines Bogens (B) verlaufend ausgestaltet ist,
wobei die Führungskulisse (8) zweite Anteile (8b) aufweist, welche angrenzend zum mindestens einen ersten Anteil (8a) angeordnet und im Wesentlichen dreiecksförmig ausgestaltet sind,
wobei das Führungselement (9) innerhalb der ersten (8a) und zweiten Anteile (8b) der Führungskulisse (8) zumindest um die Mittelachse (7a) der Welle (7) verschwenkbar ist,
wobei mindestens zwei, bevorzugt drei Arretierpositionen des Führungselements (9) innerhalb der Führungskulisse (8) definiert sind.

2. Fahrzeugsitz (1) nach Anspruch 1,
**dadurch gekennzeichnet, dass**
ein Abstand (ΔL) zwischen der Drehachse (6) und der Welle (7) fest einstellbar ist und die Drehachse (6) in Sitzlängsrichtung (1x) hinter der Welle (7) angeordnet ist.

3. Fahrzeugsitz (1) nach Anspruch 1 oder 2,
**dadurch gekennzeichnet, dass**
der Bogen (B) konzentrisch um die Drehachse (6) verlaufend ausgestaltet ist.

4. Fahrzeugsitz (1) nach einem der vorhergehenden Ansprüche ,
**dadurch gekennzeichnet, dass**
die Arretierpositionen des Führungselements (9) dadurch definiert sind, dass Außenflächen (9a, 9b) des Führungselements (9) mit zum Bogen (B) geneigten Außenflächen (v) der Führungskulisse (8) in direktem Kontakt sind.

5. Fahrzeugsitz (1) nach einem der vorhergehenden Ansprüche,
**dadurch gekennzeichnet, dass**
eine Gewindemutter (M1) mit einem benachbart zum Führungselement (9) angeordneten Außengewinde (M2) der Welle (7) wechselwirkbar und, insbesondere mittels einer Unterlegscheibe (15), gegen eine erste Außenfläche (10a) des Kulissenelements (10) konterbar ist.

6. Fahrzeugsitz (1) nach einem der vorhergehenden Ansprüche,
**dadurch gekennzeichnet, dass**
eine Mitnehmerscheibe (12) zwischen einer zweiten Außenfläche (10b) des Kulissenelements (10) und einer Flanschscheibe (11) verdrehsicher gegenüber der Welle (6) anordenbar ist, wobei die Mitnehmerscheibe (12) an zumindest einer Umfangsstelle ein Anfasserelement (13) aufweist.

7. Fahrzeugsitz (1) nach einem der vorhergehenden Ansprüche,
**dadurch gekennzeichnet, dass**
die Flanschscheibe (11) in Richtung der Mittelachse (7a) der Welle (7) angeordnet und mit dem Führungselement (9) starr verbunden ist.

## Claims

1. Vehicle seat (1) comprising an operator device (4) arranged at a side for operating vehicle seat and/or vehicle functions, and an adjustment device (5) for adjusting a vertical position (Δz) and/or a tilt level (a) of the operator device (4) with respect to the rest of the vehicle seat (1)
the adjustment device (5) comprises an axis of rotation (6) extending in the seat width direction (1y), and a shaft (7) which is connected to the operator device (4), is spaced apart from the axis of rotation (6) and is arranged so as to be pivotable about said axis together with the operator device (4),
**characterized in that**
a guide element (9), arranged in the direction of a central axis (7a) of the shaft (7) and fixedly connected to the shaft (7), can be moved within a guide link (8) of a link element (10) with respect to the shaft (7) pivoting about the axis of rotation (6), the guide link (8) having at least one first part (8a) shaped so as to extend along a portion of an arc (B), wherein the guide link (8) has second parts (8b) which are arranged so as to adjoin the at least one first part (8a) and are substantially triangular,
wherein the guide element (9) is pivotable at least about the central axis (7a) of the shaft (7) within the first (8a) and second parts (8b) of the guide link (8), at least two, preferably three, locked positions of the guide element (9) being defined within the guide link (8).

2. Vehicle seat (1) according to claim 1,
**characterized in that**
a distance (ΔL) between the axis of rotation (6) and the shaft (7) can be permanently fixed and the axis of rotation (6) is arranged behind the shaft (7) in the seat longitudinal direction (1x).

3. Vehicle seat (1) according to claim 1 or claim 2,
**characterized in that**
the arc (B) is formed so as to extend concentrically about the axis of rotation (6).

4. Vehicle seat (1) according to any of the preceding claims,
**characterized in that**
the locked positions of the guide element (9) are defined by outer surfaces (9a, 9b) of the guide element (9) being in direct contact with outer surfaces (v) of the guide link (8) that are at an angle to the arc (B).

5. Vehicle seat (1) according to any of the preceding claims,
**characterized in that**
a threaded nut (M1) can interact with an external thread (M2) of the shaft (7), which thread is arranged adjacently to the guide element (9), and in particular can be fixed against a first outer surface (10a) of the guide link (10) by means of a washer (15).

6. Vehicle seat (1) according to any of the preceding claims,
**characterized in that**
a driving disc (12) can be arranged between a second outer surface (10b) of the guide link (10) and a flanged disc (11) in a non-rotational manner with respect to the shaft (6), the driving disc (12) having a handle element (13) on at least one circumferential point.

7. Vehicle seat (1) according to any of the preceding claims,
**characterized in that**
the flanged disc (11) is arranged in the direction of the central axis (7a) of the shaft (7) and is fixedly connected to the guide element (9).

## Revendications

1. Siège de véhicule (1) comportant un dispositif de commande (4) disposé latéralement pour la commande de fonctions de siège de véhicule et/ou de véhicule et un dispositif de réglage (5) pour le réglage d'une position verticale (Δz) et/ou d'un degré d'inclinaison (a) du dispositif de commande (4) par rapport au reste du siège de véhicule (1),
le dispositif de réglage (5) comportant un axe de rotation (6) s'étendant dans la direction de la largeur du siège (1y) et un arbre (7) qui est relié au dispositif de commande (4) et lequel est disposé espacé de l'axe de rotation (6) et apte à pivoter autour de celui-ci conjointement avec le dispositif de commande (4),
**caractérisé par le fait qu'**
un élément de guidage (9), lequel est disposé dans la direction d'un axe central (7a) de l'arbre (7) et relié rigidement à l'arbre (7), est déplaçable à l'intérieur d'une coulisse de guidage (8) d'un élément coulisse (10) par rapport au pivotement de l'arbre (7) autour de l'axe de rotation (6),
la coulisse de guidage (8) présentant au moins une première partie (8a) dont la forme est configurée s'étendant le long d'une section d'un arc (B),
la coulisse de guidage (8) présentant des secondes parties (8b), lesquelles sont disposées adjacentes à au moins une première partie (8a) et sont configurées sensiblement de forme triangulaire,
l'élément de guidage (9) étant apte à pivoter au moins autour de l'axe central (7a) de l'arbre (7) à l'intérieur des premières (8a) et secondes (8b) parties de la coulisse de guidage (8),
au moins deux, de préférence trois, positions d'arrêt de l'élément de guidage (9) étant définies à l'intérieur de la coulisse de guidage (8).

2. Siège de véhicule (1) selon la revendication 1,
**caractérisé par le fait qu'**
une distance (ΔL) entre l'axe de rotation (6) et l'arbre (7) est apte à être fixée de façon permanente et l'axe de rotation (6) est disposé derrière l'arbre (7) dans la direction longitudinale du siège (1x).

3. Siège de véhicule (1) selon l'une des revendications 1 ou 2,
**caractérisé par le fait que**
l'arc (B) est configuré s'étendant de façon concentrique autour de l'axe de rotation (6).

4. Siège de véhicule (1) selon l'une des revendications précédentes,
**caractérisé par le fait que**
les positions d'arrêt de l'élément de guidage (9) sont définies de telle sorte que des surfaces externes (9a, 9b) de l'élément de guidage (9) sont en contact direct avec des surfaces externes (v) de la coulisse de guidage (8) inclinées par rapport à l'arc (B).

5. Siège de véhicule (1) selon l'une des revendications précédentes,
**caractérisé par le fait qu'**
un écrou fileté (M1) est apte à interagir avec un filetage externe (M2) de l'arbre (7) disposé au voisinage de l'élément de guidage (9) et est apte à être bloqué contre une première surface externe (10a) de l'élément coulisse (10), en particulier au moyen d'une rondelle (15).

6. Siège de véhicule (1) selon l'une des revendications précédentes,
**caractérisé par le fait qu'**
un disque d'entraînement (12) est apte à être disposé entre une seconde surface externe (10b) de l'élément coulisse (10) et une collerette (11) d'une manière bloquée en rotation par rapport à l'arbre (6), le disque d'entraînement (12) présentant un élément de saisie (13) sur au moins un emplacement périphérique.

7. Siège de véhicule (1) selon l'une des revendications précédentes,
**caractérisé par le fait que**
la collerette (11) est disposée dans la direction de l'axe central (7a) de l'arbre (7) et est reliée rigidement à l'élément de guidage (9).
